# EUROPEAN PATENT APPLICATION

(11) **EP 4 016 365 A1**
(43) Date of publication of application: **22.06.2022**
(21) Application number: 20214515.7
(22) Date of filing: 16.12.2020
(51) Int. Cl.: G06F 30/23, B29C 64/386, B29C 64/40, B33Y 50/00, B22F 10/40, B22F 10/80, G06F 113/10

(54) **COMPUTER-IMPLEMENTED METHOD OF REDUCING SUPPORT STRUCTURES IN TOPOLOGY OPTIMIZED DESIGN FOR ADDITIVE MANUFACTURING**

(71) Applicant: Siemens Energy Global GmbH & Co. KG, 81739 München (DE); University of Waterloo, Waterloo N2L 3G1 (CA)
(72) Inventor: BONAKDAR, Ali, H3E2B7 Nuns Island (CA); IBHADODE, Osezua, N2L3V5 Waterloo (CA); TOYSERKANI, Ehsan, N2V0E7 Waterloo (CA)
(74) Representative: Roth, Thomas

(57) **Abstract**

A Computer-implemented method of reducing support structures (11) in topology optimized design for additive manufacturing is presented. The method comprises, a), importing an optimized topology (T) of a component (11), b), identifying boundaries (B) of the topology, c), identifying of overhang feature(s) (O) in the topology, wherein any overhang feature encloses an angle (α) of 45° or less to the build plane, (d), adding support-free trusses (t) to the identified overhanging feature(s) in the topology, (e), applying a density filter to the support-free trusses, and (f), verifying a volume criterion (V), wherein a volume fraction of a structure (10) for the topology including the support-free trusses (t) is corrected when the criterion is not satisfied. Moreover, a related additive manufacturing process as well as a corresponding computer program product are presented.

## Description

The present invention relates to a computer-implemented method of reducing support structures in topology optimized structures for additive manufacturing. Furthermore, a corresponding additive manufacturing method and computer program product are provided.

Preferably, the design relates to a structure or component of a turbo machine, e.g. applied in the flow path hardware of a gas turbine. The component is, thus, preferably highly resilient to mechanical as well as thermal loads. To this effect, said components may be made of a nickel- or cobalt-based superalloy, particularly a precipitation hardened alloy. In the alternative, the component may pertain to a high-performance component, such as a component applied in power generation, in the aviation or the automotive industry.

To improve the performance and reduce cost in producing such components in gas or steam turbine or generator applications, there is the demand for design or construction solutions using topology optimization and/or overhang or support structure elimination.

"Topology optimization" is a known tool, employing mathematical algorithms, by which an optimal structural layout of the component's structure under certain boundary conditions and constraints, may be provided. Topology optimization aims at obtaining an optimal geometry or design e.g. at a minimal material effort, thereby saving material volume, weight and production costs. In turn, for such software-related solutions, the most pressing demand is computational cost-effectiveness and the mastery of convergence difficulties in the case of complex topology optimization design problems and/or multi-physics boundary scenarios.

Complex or intricately designed components are known to be suitable for "additive manufacturing", employing a layer-by-layer buildup.

Additive manufacturing (AM) or "3D-printing" techniques particularly comprise e.g. powder-bed-fusion methods, such as selective laser melting (SLM) or laser powder bed fusion (LPBF), selective laser sintering (SLS) and electron beam melting (EBM).

Such powder-bed methods have proven to be useful and advantageous in the fabrication of prototypes or complex components, such as components with a mazelike or convoluted structure or functionally cooled components. Further, additive manufacturing stands out for its short chain of process steps which in turn enables material economization and a particularly low lead time.

LPBF-apparatuses or setups usually comprise a manufacturing or build platform on which the component is built layer-by-layer after the feeding of a layer of a powdery base material which may then be melted, e.g. by an energy beam, such as a laser, and subsequently solidified. The layer thickness is determined by a recoater that moves, e.g. automatically, over the powder bed and removes excess material from a manufacturing plane. Typical layer thicknesses amount to between 20 µm and 80 µm. During the manufacture, said energy beam scans over the surface and melts the powder on selected areas which may be predetermined by a CAD-file according to the geometry of the component to be manufactured. Said scanning or irradiation is preferably carried out in a computer-implemented way or via computer aided means, such as computer aided manufacturing (CAM) instructions, which may be present in the form of a dataset. Said dataset or CAM-file may be or refer to a computer program or computer program product.

It is well known that structural design complexities do usually not pose significant challenges to many additive manufacturing approaches. However, several manufacturing constraints should be considered in the design process for additive manufacturing. One critical constraint is particularly the presence of unsupported or overhanging features within the structure. If these features are not reduced or eliminated, they can cause a poor structural quality of the part as well as complicating the "printing" process as a whole.

There are several efforts that have been put into practice for eliminating or reducing overhanging features or overhangs in AM-design or parts to be additively manufactured.

It is e.g. possible to define an overhang constraint in conventional topology optimization program modules which is, however, expected to be integrated within conventional topology optimization methodologies. This constraint performs well but drawbacks are posed by considerable computation times and severe convergence difficulties when utilized.

An approach for formulating overhang restrictive filters within topology optimization is e.g. provided by M. Langelaar, "An additive manufacturing filter for topology optimization of print-ready designs," Struct. Multidiscip. Optim., vol. 55, no. 3, pp. 871-883, 2017, doi: 10.1007/s00158-016-1522-2. Although such solutions successfully serve the purpose of overhang restrictions, they are known to be dependent on a topology optimization methodology, optimizer and other tuning or computation parameters. Also, due to their integration into the topology optimization functionality, corresponding gradients have to be calculated thereby increasing computation costs especially for complicated topology optimization problems.

The term "gradient(s)" relates to sensitivity functions, particularly to derivatives of the objective and constraint functions of the underlying topology optimization problem.

Another approach uses formulating so-called overhang constraints within topology optimization routines. Such constraints may be added to the material volume constraint in a related topology optimization problem definition. This strategy is, however, also integrated within the actual topology optimization. Thus, the same problems arise here.

Furthermore, a so-called consolidated objective function of a minimum compliance of flexibility and a related overhang function were formulated. While this methodology is much less common in the literature, it has already been implemented and shows reasonable results in the formation of overhang features. Unfortunately, instead of eliminating overhangs, the results rather included even more unsupported features. In addition, the challenges in the aforementioned strategies are encountered here as well.

It is, thus, an object of the present invention to provide for a solution of the outlined problems. The proposed methodology is particularly a post-topology-optimization model which helps to overcome the mentioned drawbacks particularly for complex topological component design.

The mentioned object is achieved by the subject-matters of the independent claims. Advantageous embodiments are subject-matter of the dependent claims.

An aspect of the present invention relates to a computer-implemented method of reducing or eliminating overhang or - as the case may be - support structures in topology optimized design or structures of components to be constructed via additive manufacturing.

The method comprises importing an optimized topology or design, such as a geometry with intricate or filigree features, of the component. Such topology is expediently already the result of a topology optimization routine.

The method further comprises identifying boundaries of the topology. The identification of boundaries is a prerequisite for the aim of optimizing topology or - as the case may be - the reduction or elimination of support structures.

The method further comprises identifying (critical) overhangs or overhang features in the topology, wherein an overhang feature encloses an angle of 45° or less to a build plane, such as a direction of extension of a build platform onto which the component is additively established, such as via LPBF.

The method further comprises adding, including or introducing support-free trusses to the identified overhanging features in the topology. Such (additional) support-free trusses or struts may be provided in an expedient way in order to reliably support previously detected so-called "infeasible" or overhanging features, i.e. features that inevitably need to be supported during the AM buildup.

The term "support-free" shall in this regard mean that the respective truss serves as a workaround, improvement and/or replacement for conventional, bulky or lattice support structures which require complex removal after the additive buildup of the component. On the contrary, the trusses which constitute permanent features that end up as a part of the component's structure e.g. excel in a particularly low volume fraction and advantageously also serve as a reliable mechanical and/or thermal support structure during the build process.

The method further comprises applying a density filter to the support-free trusses.

In an embodiment, the filter is a computational filter for density-based topology optimization approaches which effects or projects the reduction of support structures in the topology of the component. Said filter may e.g. incorporate all relevant main characteristics of a generic layerwise additive manufacturing process, such as a laser powder bed fusion or electron beam melting process, and in this way comply with typical (geometrical) AM restrictions. In other words, the density filter advantageously provides for practical topological solutions e.g. by eliminating "chess-like" topological patterns. It also helps to enforce a threshold on a minimum feature size of the topology ensuring every feature in the structure or topology to be additively manufacturable.

In an embodiment, the filter is set up to ensure the topology of a structure or component - intended to be established by powder bed based additive manufacturing - to be optimized by or with regard to volume minimization and/or stiffness maximization.

The method further comprises verifying a volume criterion or condition, wherein a volume fraction of a structure for the topology including the support free trusses is corrected when the criterion is not satisfied or complied with. In other words, a volume correction stage is introduced in this way.

In an embodiment, otherwise, i.e. when the volume criterion is satisfied, the given methodology may be finished or completed, and e.g. an according dataset or program product be rendered.

This methodology advantageously eliminates overhang features formed in structures or parts designed by topology optimization solutions in order to further reduce or eliminate the need for contemplating complex internal support structures. Consequently, manufacturability (printability) by additive manufacturing processes is significantly improved, as remaining design limitations can almost fully be resolved. The presented methodology, thus, provides for an automated and/or design-independent design optimizer which is - owed to the beneficial computational effort - practically applicable to almost every additive design.

On the contrary, as mentioned above, most commercially available methodologies which eliminate overhang features are integrated within topology optimization. Disadvantages of this approach are posed by an increased computation times, difficulties through lack of computational convergence or restrictions to a specific type of topology optimization process.

Particularly, the presented methodology features an application to the optimized structure after a topology optimization process has already been performed. This algorithmic separation - though being counterintuitive - only allows to prevent contributions from this methodology to sensitivity calculations, convergence difficulties and computational costs of the topology optimization process itself.

In an embodiment the identification of the boundaries comprises selecting boundary nodes from mesh nodes of a mesh or grid domain by comparing a mean density of elements around the mesh nodes with a threshold density value. When said threshold density value is e.g. exceeded, a given boundary node or boundary may apply or hold as being identified.

In an embodiment the identification of overhang features comprises extracting overhanging or unsupported nodes from the boundary nodes, wherein any overhang feature of the topology is defined by the overhanging nodes and wherein an angle of 45° defines a self-supporting threshold.

In an embodiment, mesh elements of the mesh or mesh domain are uniform "four-noded" quads. This embodiment represents an expedient voxel field in the given context.

In an embodiment, the volume fraction of the structure for the topology is reduced when the volume criterion is not satisfied, and/or the method is continued or reiterated with the step of identifying the boundaries of the (volume-) corrected topology. According to this embodiment, advantageously, a closed-loop or feedback optimization may be provided, and the corrected topology or structure may be provided to the boundary identification anew. Furthermore, a significant increase in the volume, when support-free trusses are added, can advantageously be prevented, thereby complying with the volume constraint to the respective design problem formulation.

Usually during the introduction of trusses or support trees or lattices in conventional software approaches for additive manufacturing leads to an increase of the support structure volumes, such as beyond the relevant design specification. Therefore, the described volume correction stage is advantageous in order to obtain a new, corrected, or preferably lower, volume fraction to be used in the final or iterated topology optimization, boundary identification and overhang reduction, as described.

In an embodiment, the support-free trusses are each defined by or consist of a truss root and a truss stem. The truss root, preferably, directly affects said overhanging or unsupported features, whereas the stem may stabilize the mentioned root against an underlying build platform. The exact geometry of the additional support-free trusses may e.g. be defined by parameters, such as a thickness, and an angle which may be user-defined or defined by certain boundaries.

In an embodiment, the presented method is a post-topology optimization methodology being implemented or implementable independent from the topology optimization itself. According to this embodiment, the above-mentioned advantages concerning the computational effort may be provided. More particularly, there may be a complete independence of the presented approach from several aspects of the topology optimization method, such as including interpolation methods, optimizer types, specific parameter settings, tunings, or the like.

Another aspect of the present invention relates to a computer program product comprising instructions which, when the program is executed by a computer, data processing device or build processor, cause said means to carry out the method as described herein.

A computer program product as referred to herein may relate to a computer program means media constituting or comprising a computer-readable storage medium (be it volatile and nonvolatile) like a memory card, a USB-stick, a CD-ROM, a DVD or a file downloaded or downloadable from a server or network. Such product may be provided by a wireless communication network or via transfer of the corresponding information by the given computer program, computer program product or the like. A computer program product may include or be included by a computer-readable storage medium storing applications, programs, program modules, scripts, source code, program code, object code, byte code, compiled code, interpreted code, machine code, executable instructions, and/or the like.

Another aspect of the present invention relates to a method of additive manufacturing a component, such as a high-performance component, via laser powder-bed fusion or electron beam melting, wherein the component is constructed with an optimized topology and/or a reduced requirement of support structures according to the method as described.

Advantages and embodiments relating to the described method may as well pertain or be valid with regard to the computer program product and/or the component as manufactured by an additive manufacturing process having executed or making use of the described solution.

Further features, expediencies and advantageous embodiments become apparent from the following description of the exemplary embodiment in connection with the Figures.
Figure 1 shows a simple flowchart indicating method steps of the present invention.
Figure 2 illustrates measures of the given method for reducing support structures in a topology optimized AM-design.
Figure 3 shows an overhang feature of the design and an underlying truss in greater detail.

Like elements, elements of the same kind and identically acting elements may be provided with the same reference numerals in the figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

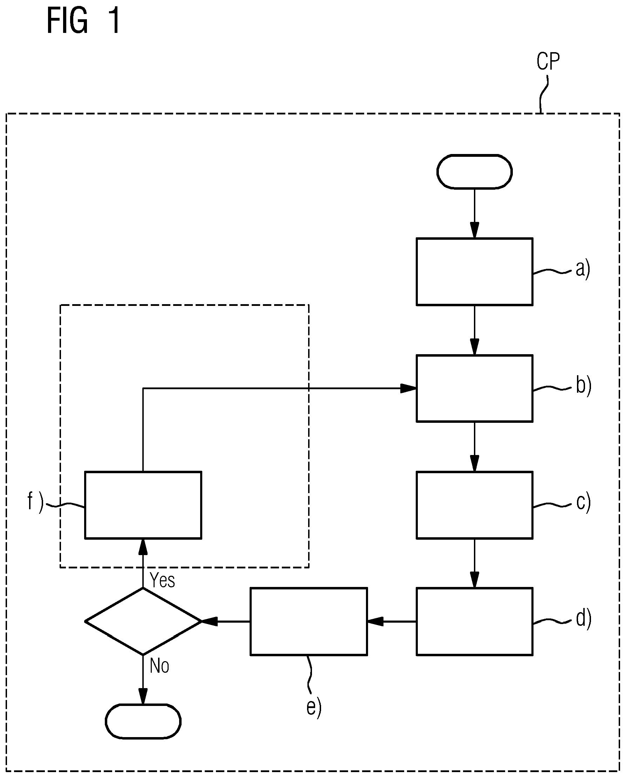

Figure 1 shows a schematic flow chart indicating method steps according to the present invention. The presented method is a computer-implemented method of reducing support structures 11 in a topology optimized design of a component 10 for additive manufacturing, preferably by powder-bed-based methods, such as laser powder bed fusion (also known as selective laser melting) or electron beam melting.

The method comprises in step a) importing an optimized topology T of a component 11. Said topology may relate to the design of the component 10, such as the geometry, as may be provided by means of a CAD-file ("Computer-Aided-Design").

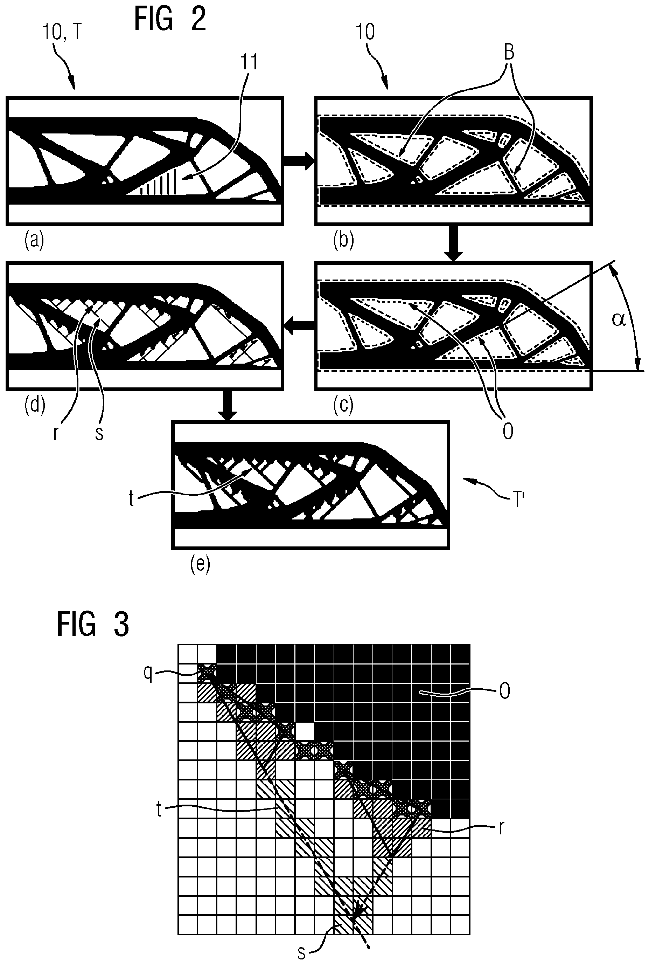

The method further comprises in step b) identifying boundaries B of the topology. This is described in more detail by way of Figure 2 below.

The method further comprises in step c) identifying of overhang features O in the topology, wherein any overhang feature encloses an angle α relative to the build plane of 45° or less.

Moreover, the method comprises in step d) adding support-free trusses t to the identified overhanging features (cf. as well Figure 2 for more details), and in step e) applying a density filter to the support-free trusses.

The method further comprises in step f) verifying a volume criterion V, wherein a volume fraction of a structure 10 for the topology including the support-free trusses t is corrected when the criterion is not satisfied. To this effect the upper left part of Figure 1 indicates a method stage of volume correction (cf. also Figure 2 below) via which the procedural loop is closed or fed back again to method step b) as mentioned above.

When, on the contrary, the volume criterion V is satisfied, the described methodology may be finalized the completed (cf. arrow pointing to the bottom in the left of Figure 1) and/or a corresponding product or design dataset rendered or provided to an additive manufacturing device.

The mentioned density filter is preferably set up to ensure the topology of a structure 11 - to be established by powder bed based additive manufacturing - to be optimized with regard to volume minimization and/or stiffness-maximization. Said filter may e.g. constitute only one of a plurality of filters in the indicated computational chain, such as preferably the last one filter applied to the resulting design of support-free trusses. Said filter may e.g. employ a so-called Heaviside projection or similar measures.

The presented methodology is preferably a post-topology-optimization methodology being implemented independent from the topology optimization itself.

The frame around the flowchart being indicated by numeral CP shall indicate that the presented method may be implemented or implementable by a computer program or computer program product CP. Said computer program product may, thus, comprise instructions which, when the program is executed by a computer, data processing device or build processor of an additive manufacturing device (presently not explicitly indicated), cause said means to carry out said method. To this effect, the presented approach may be fully implemented by generic data processing means.

Figure 2 illustrates by way of a set of cross-sectional or side view images (two-dimensional) an intricate topology of a structure to be additively manufactured, such as by selective laser melting. Said structure may e.g. be or be part of a low-weight component of high performance and/or thermal and mechanical resistivity via laser powder-bed fusion or electron beam melting. Likewise, the components design may already be optimized in terms of its topology T (cf. upper left picture in the sequence of Figure 2).

The sub-figure indicated with a) particularly indicates an intricate topology or web-like design of a component 10.

Reference numeral 11 indicates a support structure which would usually be necessary in order to mechanically and/or thermally support an overhanging region or branch of the topology above the support structure. This situation is known in powder bed fusion methods and poses the major limitation in the design freedom of AM-parts. The support structure 11 is - for the sake of simplicity - only indicated below that single mentioned branch, whereas it would theoretically have been necessary also in the further overhanging regions, such as regions extending at an angle of 45° or less as compared to an according build plane or build platform (cf. horizontal line in Figure 2).

As mentioned above, the presented method advantageously allows to overcome the implications of the support structure 11. It is known that bulky and extensive support structures in general significantly complicate additive manufacturing, as it is difficult and time-consuming to remove said structures lateron. Said removal may still further be complicated by a poor accessibility of the support or overhangs and due to the fact that the supports - being obliged to be manufactured of the same material as a component - may oppose high mechanical strength.

In order to overcome or eliminate or reduce said supports, the presented method, as a next step, comprises the identification of boundaries B as shown in Figure b).

A boundary may relate to the physical edge or surface of the topology or an according domain.

The identification of the boundaries B or boundary nodes are selected from mesh nodes of a mesh or grid or a related topological domain. Said nodes preferably only pertain to grid points in the underlying meshed domain, e.g. uniform, bilinear quads or squares which constitute the mesh elements. In other words, the mesh elements of the mesh or meshed domain are preferably uniform (four-noded) quads q, as is further illustrated in Figure 3 below. The mentioned selection of the boundary nodes from the mesh nodes is preferably carried out by comparing a mean density of elements around the mesh nodes with a threshold density value. For instance, when said mean density exceeds the mentioned threshold value, the related notes or quads may actually be identified as a boundary.

This threshold density value is e.g. held at 0.1 as this is considered an expedient and/or sufficiently liberal value but may be increased or decreased depending on the particular topology otpimization problem or model.

The image indicated with numeral c) shall indicate the identification of overhang features O. It is apparent that not every boundary as indicated in the previous step indeed poses an overhang O. Expediently overhangs relate to distinctly down-facing (so-called downskin faces) surfaces or edges in the topology, whereas e.g. upward-facing surfaces (so-called upskin faces) constitute boundaries only.

The identification of overhang features O, thus, comprises extracting overhanging or unsupported nodes from the boundary nodes, wherein any overhang feature of the topology is defined by the overhanging nodes, and wherein an angle α of 45° further defines a self-supporting threshold, i.e. a part of the topology which does not require (further) support.

The other hand, the overhanging nodes define those features that have insufficient support or supporting elements underneath (infeasible features) and need to be stabilized, such as by trusses t.

Said trusses t and further details are shown in Figure 3, which indicates a voxel field for the computational steps of the presented method, wherein boundary nodes or corresponding quads are identified as defining an overhang in that their nodal angles are compared with the given angle threshold (not explicitly indicated in Figure 3).

In other words only those overhangs or overhanging features O shall be identified here which enclose an angle α of 45° or less as compared to the horizontal plane, i.e. the extension of an according build plane or powder bed. Said angle preferably defines a self-supporting threshold angle.

An angle of greater than 45° may practically allow for a proper solidification result of the according, probably slightly still overhanging structure of the component 10. Of course, almost horizontal overhangs are most critical to the additive process and inevitably require to be identified for the presented support elimination strategy.

The presented method or approach may adopt a density-based gradient topology optimization.

In the next method step, as shown in Figure d), "support-free" trusses are added to the topology, more particularly to the identified overhanging features O in the topology T. The support-free trusses t are each defined by a truss root r and truss stem s, whereas the truss root r, preferably, affects the overhanging or bridging part of the component 10 and the stem s "supports" or connects the whole truss t to the underlying build plate or structure 10.

Said trusses t or support-free struts, preferably, form part of the structure or topology itself. Moreover, said trusses t are defined by specified thicknesses and angles. For instance, overhang elements O are obtained from overhanging nodes and used to actually implement the support-free trusses as shown in Figures 2d) and 3.

Furthermore, method step e) (cf. bottom picture of Figure 2) it is shown that a volume correction step, as described by way of Figure 1 above, is carried out when the described volume criterion C is not complied with. Particularly, as is apparent from the comparison of pictures d) and e) in Figure 2, the volume is preferably reduced or minimized, such as presuming a given boundary stiffness. Then, the boundaries B are preferably identified anew base on the volume-corrected trusses. Also, the remainder of the method steps may be repeated until an optimized and support-reduced design for the topology of the structure 10 is provided.

A result of the given method, preferably an improved topology T' is provided (cf. Figure e)), e.g. a topology minimized in the requirement of supports 11. As compared to conventional topology optimized structures, this topology T' preferably stands out for a far reduced amount of support structures. Preferably, the only supporting elements needed anymore are constituted by the support-free trusses i.e. solely a very filigree structural network (cf. Figure 2d)).

Figure 3 further indicates that the trusses t, particularly its roots r and stems s are (computationally) defined and/or identified via the indicated quads q in the voxel field.

In this methodology, the intricacies of the topology optimization method employed do advantageously not affect the performance of the whole process. Therefore, computational efficiency is increased and the drawbacks of convergence difficulties are advantageously prevented. On the contrary, due to the nature of state-of-the-art (integrated) overhang elimination methods, those tend to either perform poorer or break down completely when major changes are introduced in the topology optimization scheme. Further, the provided methodology allows for ample design expression or definition regarding the geometrical properties of the additional support-free struts. In other words, a user or designer is easily given the opportunity of dictating strict strut or truss requirements such as in terms of thickness, orientation or angle, space between strut roots, and size of strut roots which may in turn influence the number of struts or stems.

The component 10 as referred to herein may particularly relate to a part or an article of complex shape, such as with filigree portions of structures. Preferably, said component is made of a high-performance material, such as a material of great strength and/or thermal resistivity. Particularly, said part may constitute a part of a steam or gas turbine component, such as a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit kit. Alternatively, said component may relate to another or similar component.

## Claims

1. Computer-implemented method of reducing support structures (11) in topology optimized design (10) for additive manufacturing, the method comprising:
- a) importing an optimized topology (T) of a component (11),
- b) identifying boundaries (B) of the topology,
- c) identifying overhang features (O) in the topology, wherein any overhang feature encloses an angle (α) to the build plane of 45° or less,
- (d) adding support-free trusses (t) to the identified overhanging feature(s) in the topology,
- (e) applying a density filter to the support-free trusses
- (f) verifying a volume criterion (V), wherein a volume fraction of a structure (10) for the topology including the support-free trusses (t) is corrected when the criterion is not satisfied.

2. Method according to claim 1, wherein the filter is a computational filter for density-based topology optimization approaches which effects the reduction of support structures (11) in the topology of the component (11).

3. Method according to claim 1 or 2, wherein the filter is set up to ensure the topology of a structure (11), intended to be established by powder bed based additive manufacturing, to be optimized with regard to volume minimization and/or stiffness-maximization.

4. Method according to one of the previous claims, wherein for the identification of the boundaries (B), boundary nodes are selected from mesh nodes of a mesh domain by comparing a mean density of elements around the mesh nodes with a threshold density value.

5. Method according to claim 4, wherein the identification of overhang features (O) comprises extracting overhanging nodes from the boundary nodes, wherein any overhang feature of the topology is defined by the overhanging nodes and wherein an angle (α) of 45° defines a self-supporting threshold.

6. Method according to claim 4 or 5, wherein mesh elements of the mesh are uniform four-noded quads (q).

7. Method according to one of the previous claims, wherein the support-free trusses (t) are each defined by a truss root (r) and truss stem (s).

8. Method according to one of the previous claims, wherein the volume fraction of the structure (10) for the topology (T) is reduced when the volume criterion is not satisfied, and the method is continued with the step of identifying the boundaries (B) of the corrected topology (T').

9. Method according to one of the previous claims, wherein the method is a post-topology-optimization methodology being implemented independent from the topology optimization itself.

10. Computer program product (CPP) comprising instructions which, when the program is executed by a computer, data processing device or build processor, cause said means to carry out the method of one of claims 1 to 9.

11. Method of additive manufacturing (AM) a component via laser powder-bed fusion (LPBF) or electron beam melting, wherein the component (10) is constructed with a reduced requirement of support structures according to the method one of claims 1 to 9.
